# FASCICULE DE BREVET EUROPEEN

(11) **EP 2 446 100 B1**
(45) Date de publication et mention de la délivrance du brevet: **29.07.2015**
(21) Numéro de dépôt: 10747928.9
(22) Date de dépôt: 18.06.2010
(51) Int. Cl.: E05C 19/14, E05B 63/06, B64D 29/06

(54) **VERROU POUR AERONEF COMPRENANT UN CROCHET ET UNE MANETTE**
VERSCHLUSS MIT GRIFF FÜR EIN FLUGZEUG
A LOCK HAVING A HANDLE FOR AN AIRCRAFT

(30) Priorité: 22.06.2009 FR 0954215
(43) Date de publication de la demande: 02.05.2012
(73) Titulaire: Airbus Operations, 31000 Toulouse (FR)
(72) Inventeur: FOURNIE, Jacques, F-31330 Grenade (FR); BERNUS, Christophe, F-31000 Toulouse (FR); DUPAS, Thony, F-31100 Toulouse (FR)
(74) Mandataire: Potdevin, Emmanuel Eric
(86) Numéro de dépôt international: PCT/FR2010/051226
(87) Numéro de publication internationale: WO 2010/149905

(56) Documents cités:
- DE-A1- 2 828 033
- US-A- 4 053 177
- US-A- 4 530 529
- US-A- 5 011 200

## Description

L'invention concerne les verrous pour aéronef.

Il existe sur les aéronefs de nombreux battants qui sont maintenus par un verrou dans une position prédéterminée, par exemple en position fermée. Il s'agit par exemple de capots, de trappes ou encore de radômes. Le verrou comprend un crochet apte à venir en prise avec un point d'attache fixe d'un bâti. Il comprend aussi une manette de manoeuvre du crochet, en général accessible à travers une ouverture du battant, la manette étant articulée sur ce battant d'une part et sur le crochet d'autre part.

La face externe de la manette est donc visible et accessible à travers l'ouverture du battant. Cette face a une forme, le plus souvent plane, destinée à s'étendre dans le prolongement de la face du battant. Toutefois, il se peut que, en position fermée du verrou, la face externe de la manette ne soit pas dans le prolongement de celle du battant, ce qui n'est pas souhaitable en général pour des raisons d'aérodynamisme ou d'esthétique. On peut alors y remédier en réglant la position du point d'attache du crochet. En effet, l'inclinaison de la manette en position fermée du verrou dépend notamment de la position du crochet sur le point d'attache. Toutefois, ce réglage est fastidieux à effectuer : il faut en effet ouvrir le battant pour accéder au point d'attache, puis régler ce dernier, puis ajuster la longueur du crochet en lui-même au moyen de l'organe prévu à cet effet sur le crochet. En effet, la distance entre le point d'attache et l'articulation du crochet à la manette influence l'effort que doit exercer l'opérateur sur la manette lors de la fermeture du verrou. Une fois ces opérations effectuées, on referme le battant et on examine si l'inclinaison de la manette est correcte. Dans le cas contraire, on recommence les opérations. Celles-ci seront le plus souvent à effectuer plus d'une fois, rendant ainsi la procédure itérative. De plus, l'ensemble doit être répété autant de fois qu'il y a de verrous à régler.

Le document DE-28 28 033 divulgue un verrou selon le préambule de la revendication 1.

Un but de l'invention est de faciliter l'obtention d'une inclinaison satisfaisante de la manette en position fermée du verrou.

A cet effet, on prévoit selon l'invention un verrou pour aéronef qui comprend une manette de manoeuvre et des moyens de réglage d'une inclinaison de la manette en position fermée du verrou, ces moyens étant commandables sur la manette.

Ainsi, il n'est pas nécessaire d'ouvrir et de fermer le verrou de nombreuses fois durant le réglage. L'obtention d'une inclinaison correcte de la manette est donc particulièrement simple et rapide.

Avantageusement, les moyens de réglage sont commandables en position fermée du verrou.

Ainsi on peut contrôler pendant le réglage lui-même si la position correcte est obtenue et le cas échéant interrompre immédiatement les opérations.

De préférence, le verrou comprend un dispositif de sûreté apte à interdire la manoeuvre du verrou au moyen de la manette et présentant une dimension réglable.

On peut prévoir que les moyens de réglage de l'inclinaison comprennent le dispositif de sûreté.

Ainsi, c'est en modifiant la longueur du dispositif de sûreté que l'on obtient l'inclinaison correcte de la manette. On évite donc d'ajouter au verrou un mécanisme entièrement consacré au réglage.

Dans un mode de réalisation, le verrou comprend un crochet principal, le dispositif de sûreté comprenant un crochet de sûreté fixé à un élément parmi la manette et le crochet principal par des moyens permettant de régler une position du crochet de sûreté par rapport à l'élément.

Dans un autre mode de réalisation, le verrou comprend un crochet principal, le dispositif de sûreté comprenant une tige et un crochet de sûreté apte à venir en prise avec la tige, la tige étant fixée à un élément parmi la manette et le crochet principal par des moyens permettant de régler une position de la tige par rapport à cet élément.

Avantageusement, les moyens de fixation comprennent une liaison vis-écrou.

De préférence, l'écrou est autofreiné.

On prévient ainsi un déréglage intempestif des moyens de réglage.

Avantageusement, le verrou comprend un crochet principal et des moyens de réglage d'une longueur du crochet principal.

On peut ainsi ajuster la force que doit exercer l'opérateur lors de la fermeture du verrou.

On prévoit également selon l'invention un ensemble qui comprend :
- un bâti,
- un battant, et
- un verrou apte à immobiliser le battant en position fermée par rapport au bâti, le verrou comprenant une manette de manoeuvre et des moyens de réglage d'une inclinaison de la manette en position fermée du verrou, les moyens de réglage étant commandables depuis l'extérieur du battant.

De préférence, les moyens de réglage sont commandables en position fermée du battant.

On prévoit encore selon l'invention un aéronef qui comprend un verrou selon l'invention ou un ensemble selon l'invention.

D'autres caractéristiques et avantages de l'invention apparaîtront encore dans la description suivante de deux modes de réalisation donnés à titre d'exemples non limitatifs en référence aux dessins annexés sur lesquels :
- la figure 1 est une vue en perspective d'un aéronef comprenant des ensembles selon l'invention ;
- la figure 2 est une vue en coupe d'un des ces ensembles montrant un verrou selon l'invention ;
- la figure 3 est une vue de face du verrou de la figure 2 ;
- la figure 4 est une vue à plus grande échelle du détail D du verrou de la figure 2 ;
- la figure 5 est une vue en perspective du verrou dans un premier mode de réalisation ;
- la figure 6 est une vue en perspective de l'organe de sûreté du verrou de la figure 5 ;
- la figure 7 est une vue en coupe suivant le plan VII-VII du verrou de la figure 6 ;
- la figure 8 montre la liaison vis-écrou de ce verrou ;
- la figure 9 est une vue analogue à la figure 5 montrant un deuxième mode de réalisation du verrou ;
- les figures 10 et 11 sont des vues respectivement en élévation et de dessus du verrou de la figure 9 ; et
- la figure 12 est une vue en perspective de l'écrou portant la tige dans le verrou de la figure 9.

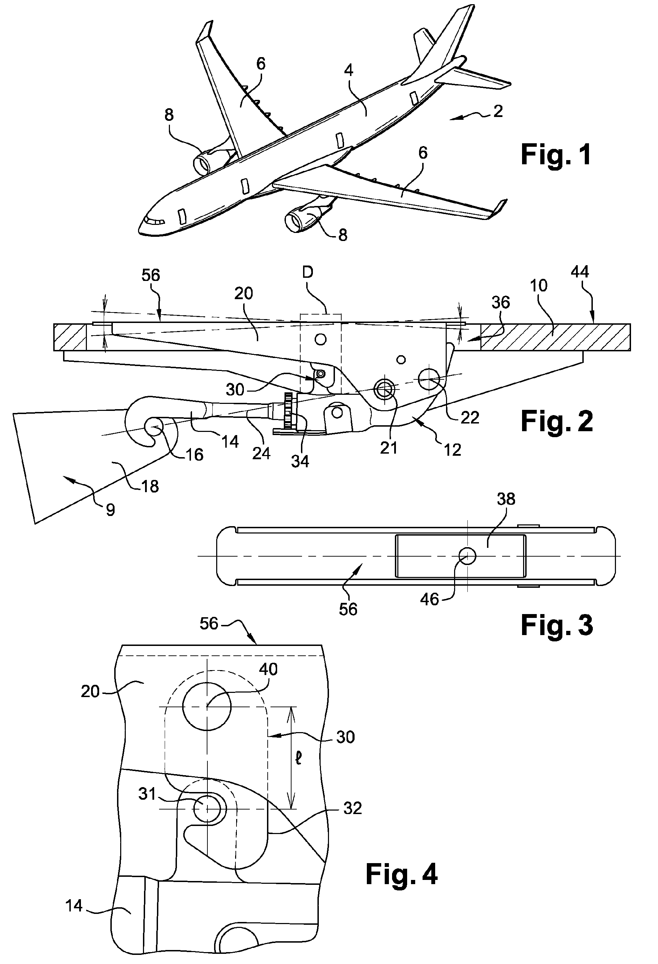

On a illustré à la figure 1 un aéronef 2 comprenant des ensembles et des verrous selon l'invention. Cet aéronef est en l'espèce un aérodyne et il s'agit ici d'un avion. L'avion comprend un fuselage 4 et deux ailes 6 portant des moteurs 8.

L'avion comprend des capots, des trappes et des radômes formant chacun des ensembles. Chaque ensemble comprend un bâti 9 fixe par rapport à la structure de l'avion, par exemple rigidement fixé au fuselage, et un battant tel qu'un ouvrant 10. L'ouvrant est monté mobile par rapport au bâti 9, par exemple en étant articulé autour d'un axe. Il peut occuper une position prédéterminée, telle qu'une position fermée dans laquelle il obture une ouverture du bâti, séparant ainsi l'extérieur et l'intérieur de l'ensemble et interdisant l'accès à l'intérieur.

L'ensemble comprend un verrou 12 selon l'invention servant à maintenir l'ouvrant 10 en position fermée. Le verrou comprend un crochet principal 14 de forme allongée présentant à son extrémité libre une partie recourbée apte à venir en prise avec une tige 16 d'un point d'attache 18 du bâti 9. Le verrou 12 comprend une manette formant poignée 20 servant à la manoeuvre du verrou et notamment du crochet, par un opérateur. La manette est montée mobile dans une ouverture ou jour 36 de l'ouvrant 10. La manette 20 est articulée d'une part sur l'ouvrant 10 autour d'un axe 21 et d'autre part au crochet 14 autour d'un axe 22. La tige 16 et les axes 21 et 22 sont parallèles à l'axe d'articulation de l'ouvrant.

Le verrou a été chaque fois illustré en position fermée. Dans cette position, le crochet subit des efforts orientés suivant une ligne 24 qui passe par l'axe de la tige 16 et par l'axe 22. En position fermée, cette ligne 24 s'étend au-delà de l'axe 21. Au cours du mouvement de fermeture, cette ligne est franchie par l'axe 21. Cette configuration permet un maintien naturel du verrou en position fermée quel que soit l'effort exercé sur le verrou suivant la ligne 24.

Le crochet 14 porte un dispositif 34 de réglage de sa longueur, comprenant par exemple un assemblage vis-écrou, qui permet d'adapter le verrou 12 à la position réelle du point d'attache 18 et ainsi de régler l'effort de levier que doit exercer l'opérateur sur la manette lors de la fermeture du verrou.

Le verrou comprend en outre un dispositif de sûreté ou *trigger* 30. Ce dispositif comprend d'une part une tige de sûreté 31 et un crochet de sûreté 32, en l'espèce un double crochet, apte à venir en prise avec la tige 31. Dans le présent exemple, cette dernière est portée par le crochet principal 14 tandis que le crochet de sûreté 32 est porté par la manette 20. Ce dispositif de sûreté 30 constitue un verrou interne au verrou 12. Lorsque le crochet 32 est en prise avec la tige 31 comme illustré sur les figures, le dispositif 30 interdit la manoeuvre du crochet principal 14 au moyen de la manette 20. Le crochet de sûreté 32 et sa tige maintiennent en effet une distance constante entre le crochet principal et la manette. Ce verrouillage supplémentaire permet de sécuriser la fermeture du verrou en prévenant toute course en rotation intempestive de la manette. Pour ouvrir le verrou 12, l'opérateur doit donc d'abord débrayer le dispositif de sûreté pour désengager le verrou 32 à l'égard de la tige 31.

Le verrou 12 comprend un bouton 38 articulé sur la manette autour d'un axe 40 de cette dernière et mobile dans une ouverture 42 de sa paroi. Le bouton 38 porte le crochet 32. Lorsque l'opérateur exerce une pression sur une extrémité du bouton 38 située de l'autre côté de l'axe 40 par rapport au crochet de sûreté 32, il provoque le basculement du bouton et le désengagement du crochet 32 à l'égard de la tige 31, ce qui entraîne le débrayage du dispositif de sûreté.

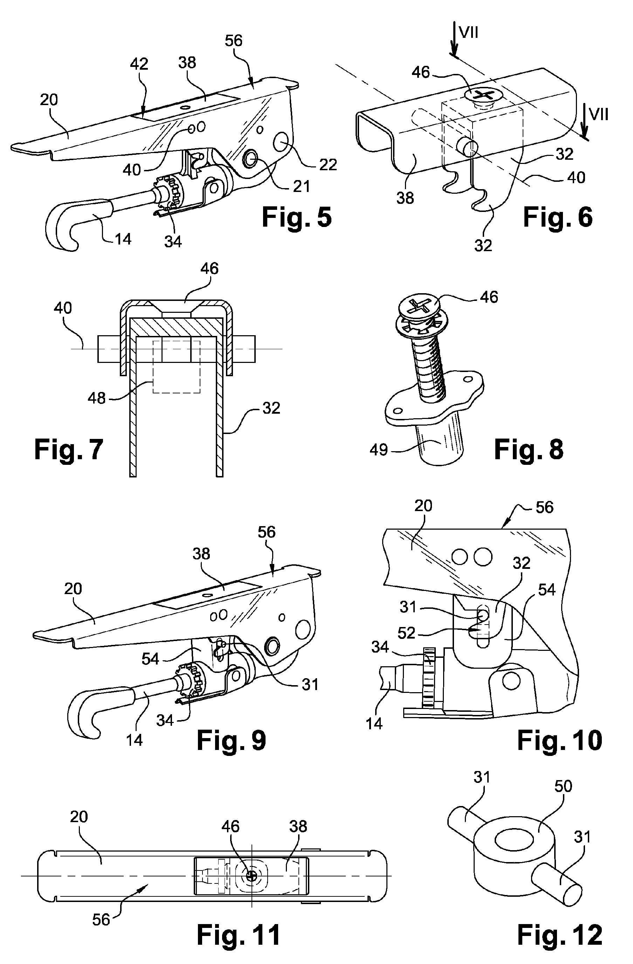

On va maintenant décrire le premier mode de réalisation illustré aux figures 5 à 8.

Le crochet 32 est fixé au bouton 38. La tige est, quant à elle, rigidement fixée de façon non réglable au crochet 14. Des moyens sont prévus pour modifier la position du crochet par rapport au bouton suivant la direction perpendiculaire à la face externe plane 56 de la manette et la face externe 44 de l'ouvrant. En l'espèce, ces moyens comprennent une vis 46 traversant des orifices coaxiaux du bouton 38 et du crochet 32. L'orifice du bouton 38 n'est pas fileté mais celui du crochet 32 l'est pour être en prise avec la vis. La vis est aussi en prise près de son extrémité libre avec un écrou tel qu'un écrou autofreiné 48 comme illustré à la figure 7 ou encore avec un réceptacle 49 tel que celui connu sous l'appellation "EN6092" et illustré à la figure 8. En faisant tourner la tête de la vis contiguë à la face 56, la liaison hélicoïdale entre la vis 46 et le crochet provoque la montée ou la descente du crochet sur le bouton et donc la modification de la dimension I du dispositif de sûreté 30. Cette dimension, illustrée à la figure 4, est mesurée entre l'axe 40 et l'axe de la tige 31.

Un deuxième mode de réalisation a été illustré aux figures 9 à 12. Cette fois, le crochet de sûreté 32 est rigidement fixé au bouton 38 de façon non réglable. C'est la position de la tige 31 par rapport au crochet principal 14 qui peut être réglée. A cette fin, la tige 31 est divisée en deux parties rigidement fixées à un écrou 50 et s'étendant dans le prolongement l'une de l'autre de part et d'autre de l'écrou, perpendiculairement à l'axe principal de l'écrou. Le crochet 14 porte un fourreau 54 de forme générale cylindrique s'étendant perpendiculairement à la direction générale du crochet et en direction de la manette. Ce fourreau 54 présente deux gorges allongées rectilignes verticales opposées 52, dans lesquelles pénètrent respectivement les parties de la tige 31. Celles-ci avec l'écrou 50 sont donc mobiles à coulissement dans le conduit 54. Une vis 56 est prévue qui traverse un orifice du bouton 38 et un orifice du crochet 32, ces deux orifices étant non filetés, et vient finalement en prise avec l'écrou 50. La rotation de la vis, à nouveau commandée sur la tête de la vis contiguë à la face 56, permet de modifier la position de la tige 31 et donc la dimension I du dispositif de sûreté.

Dans ces deux modes de réalisation, on se trouve donc en présence d'un dispositif de sûreté 30 dont une dimension I est réglable, dimension qui est mesurée suivant une direction non parallèle au crochet 14 et à la manette 20. Ce réglage revient à modifier une longueur totale du dispositif de sûreté 30. Il peut être effectué, lorsque le verrou est en position fermée et le battant en position fermée, au moyen de la vis 46 qui s'étend sur la face externe 56 de la manette et est donc accessible depuis l'extérieur de l'ensemble. On observe ici que le point d'attache 18 n'est pas accessible une fois le battant fermé.

La modification de la dimension du dispositif de sûreté entraine une modification de l'angle entre la manette 20 et le crochet 14 et donc une modification de l'inclinaison ou de l'assiette de la manette 20 par rapport à la face externe 44 de l'ouvrant. On peut donc ajuster cette inclinaison pour que la face externe 56 de la manette soit dans la continuité ou le prolongement de celle 44 de l'ouvrant.

Le point d'attache 18 sera par exemple situé sur le fuselage, l'aile, une nacelle, etc.

On observera que l'invention permet aussi de se dispenser éventuellement de moyens de réglage de la position du point d'attache 18. Or il s'agit d'un avantage particulièrement intéressant dans la mesure où les systèmes de réglage de ces points qui encaissent des efforts substantiels ont généralement des masses importantes.

Bien entendu, on pourra apporter à l'invention de nombreuses modifications sans sortir du cadre de celle-ci. On pourrait prévoir que le crochet de sûreté est fixé au crochet principal et non à la manette de même que la tige 31 serait fixée à la manette et non au crochet principal.

## Revendications

1. Verrou (12) pour aéronef (2), comprenant :
- une manette de manoeuvre (20), et
- des moyens (30) de réglage d'une inclinaison de la manette en position fermée du verrou, ces moyens étant commandables sur la manette (20),
**caractérisé en ce qu'**il comprend un dispositif de sûreté (30) apte à interdire la manoeuvre du verrou au moyen de la manette et présentant une dimension réglable (I).

2. Verrou selon la revendication précédente dans lequel les moyens (30) de réglage de l'inclinaison comprennent le dispositif de sûreté.

3. Verrou selon au moins l'une quelconque des revendications précédentes dans lequel les moyens de réglage (30) sont commandables en position fermée du verrou.

4. Verrou selon au moins l'une quelconque des revendications précédentes qui comprend un crochet principal (14), le dispositif de sûreté (30) comprenant un crochet de sûreté (32) fixé à un élément (20) parmi la manette et le crochet principal par des moyens permettant de régler une position du crochet de sûreté par rapport à l'élément.

5. Verrou selon au moins l'une quelconque des revendications précédentes qui comprend un crochet principal (14), le dispositif de sûreté (30) comprenant une tige (31) et un crochet de sûreté (32) aptes à venir en prise avec la tige, la tige étant fixée à un élément (14) parmi la manette et le crochet principal par des moyens permettant de régler une position de la tige par rapport à cet élément.

6. Verrou selon l'une quelconque des revendications 4 ou 5 dans lequel les moyens de fixation comprennent une liaison vis-écrou (46, 48; 49; 50).

7. Verrou selon la revendication précédente, dans lequel l'écrou (48) est autofreiné.

8. Verrou selon au moins l'une quelconque des revendications précédentes qui comprend un crochet principal (14) et des moyens de réglage (34) d'une longueur du crochet principal.

9. Ensemble comprenant :
- un bâti (9),
- un battant (10), et
- un verrou (12) apte à immobiliser le battant en position fermée par rapport au bâti, le verrou comprenant une manette de manoeuvre (20), et des moyens (30) de réglage d'une inclinaison de la manette en position fermée du verrou, les moyens de réglage étant commandables depuis l'extérieur du battant, l'ensemble étant **caractérisé en ce qu'**il comprend un dispositif de sûreté (30) apte à interdire la manoeuvre du verrou au moyen de la manette et présentant une dimension réglable (I).

10. Ensemble selon la revendication précédente dans lequel les moyens de réglage (30) sont commandables en position fermée du battant (10).

11. Aéronef **caractérisé en ce qu'**il comprend un verrou selon l'une quelconque des revendications 1 à 8 ou un ensemble selon l'une quelconque des revendications 9 à 10.

## Patentansprüche

1. Riegel (12) für Flugzeug (2), umfassend:
- einen Bedienungsgriff (20) und
- Mittel (30) zum Verstellen einer Neigung des Griffs in geschlossener Stellung des Riegels, wobei diese Mittel an dem Griff (20) betätigbar sind,
**dadurch gekennzeichnet, dass** er eine Sicherungsvorrichtung (30) umfasst, die geeignet ist, die Bedienung des Riegels mittels des Griffs zu unterbinden und ein verstellbares Maß (1) aufweist.

2. Riegel nach dem vorhergehenden Anspruch, wobei die Mittel zum Verstellen (30) der Neigung die Sicherungsvorrichtung umfassen.

3. Riegel nach mindestens einem der vorhergehenden Ansprüche, wobei die Mittel zum Verstellen (30) in geschlossener Stellung des Riegels betätigbar sind.

4. Riegel nach mindestens einem der vorhergehenden Ansprüche, der einen Haupthaken (14) umfasst, wobei die Sicherungsvorrichtung (30) einen Sicherungshaken (32) umfasst, der an einem Element (20) zwischen dem Griff und dem Haupthaken durch Mittel zum Verstellen einer Stellung des Sicherungshakens gegenüber dem Element befestigt ist.

5. Riegel nach mindestens einem der vorhergehenden Ansprüche, der einen Haupthaken (14) umfasst, wobei die Sicherungsvorrichtung (30) eine Stange (31) und einen Sicherungshaken (32) umfasst, die mit der Stange in Eingriff bringbar sind, wobei die Stange an einem Element (14) zwischen dem Griff und dem Haupthaken durch Mittel zum Verstellen einer Stellung der Stange gegenüber diesem Element befestigt ist.

6. Riegel nach einem der Ansprüche 4 oder 5, wobei die Mittel zum Befestigen eine Schrauben-Mutter-Verbindung (46, 48; 49, 50) umfassen.

7. Riegel nach dem vorhergehenden Anspruch, wobei die Mutter (48) selbstsichernd ist.

8. Riegel nach mindestens einem der vorhergehenden Ansprüche, der einen Haupthaken (14) und Mittel zum Verstellen (34) einer Länge des Haupthakens umfasst.

9. Anordnung, umfassend:
- einen Rahmen (9);
- einen Flügel (10) und
- einen Riegel (12) zum Festlegen des Flügels in geschlossener Stellung relativ zum Rahmen, wobei der Riegel einen Bedienungsgriff (20) und Mittel (30) zum Verstellen einer Neigung des Griffs in geschlossener Stellung des Riegels umfasst, wobei die Mittel zum Verstellen von außerhalb des Flügels betätigbar sind, wobei die Anordnung **dadurch gekennzeichnet ist, dass** sie eine Sicherungsvorrichtung (30) umfasst, die geeignet ist, die Bedienung des Riegels mittels des Griffs zu unterbinden, und ein verstellbares Maß (1) aufweist.

10. Anordnung nach dem vorhergehenden Anspruch, wobei die Mittel zum Verstellen (30) in geschlossener Stellung des Flügels (10) betätigbar sind.

11. Flugzeug, **dadurch gekennzeichnet, dass** es einen Riegel nach einem der Ansprüche 1 bis 8 oder eine Anordnung nach einem der Ansprüche 9 bis 10 umfasst.

## Claims

1. A latch (12) for an aircraft (2), comprising:
- an operating lever (20), and
- adjustment means (30) for adjusting an angle of inclination of the lever in a closed position of the latch, said means being controllable on the lever (20), **characterized in that** it comprises a safety device (30) suitable for preventing the latch being operated by means of the lever and presenting a dimension (ℓ) that is adjustable.

2. A latch according to the preceding claim, wherein the means (30) for adjusting the angle of inclination comprise the safety device.

3. A latch according to any of the preceding claims, wherein the adjustment means (30) are operable when the latch is in the closed position.

4. A latch according to any of the preceding claims, the latch having a main hook (14), the safety device (30) including a safety hook (32) fastened to an element (20) selected from the lever and the main hook by fastener means that enable a position of the safety hook relative to said element to be adjusted.

5. A latch according to any of the preceding claims having a main hook (14), the safety device (30) including a rod (31) and a safety hook (32) suitable for engaging the rod, the rod being fastened to an element (14) selected from the lever and the main hook by fastener means that enable a position of the rod relative to said element to be adjusted.

6. A latch according to claim 4 or claim 5, wherein the fastener means comprise a screw-and-nut connection (46, 48; 49; 50).

7. A latch according to the preceding claim, wherein the nut (48) is self-locking.

8. A latch according to any of the preceding claims, the latch including a main hook (14) and adjustment means (34) for adjusting a length of the main hook.

9. An assembly comprising:
- a base (9),
- a door (10), and
- a latch (12) suitable for holding the door in a closed position relative to the base, said latch comprising an operating lever (20) and adjustment means (30) for adjusting an angle of inclination of the lever in a closed position of the latch, the adjustment means being controllable from outside the door, the assembly being **characterized in that** it comprises a safety device (30) suitable for preventing the latch being operated by means of the lever and presenting an adjustable dimension (ℓ).

10. An assembly according to the preceding claim, wherein the adjustment means (30) are controllable while the door (10) is in the closed position.

11. An aircraft, **characterized in that** it includes a latch according to any one of claims 1 to 8, or an assembly according to claim 9 or claim 10.
